# EUROPEAN PATENT APPLICATION

(11) **EP 4 343 797 A1**
(43) Date of publication of application: **27.03.2024**
(21) Application number: 23189461.9
(22) Date of filing: 03.08.2023
(51) Int. Cl.: H01F 27/25, H01F 27/26, H01F 3/04

(54) **HOLDING MECHANISMS FOR ELECTROMAGNETIC CORES**

(30) Priority: 23.09.2022 GB 202213879
(71) Applicant: Enoda Ltd., London SW19 2RR (GB)
(72) Inventor: SCOBIE, Andrew John, London, SW19 2RR (GB); WAN, Yihong, London, SW19 2RR (GB)
(74) Representative: Simmons & Simmons

(57) **Abstract**

There is provided a holding mechanism for an electromagnetic core which has a predetermined number of limbs, e.g. three limbs, arranged around a central axis. The holding mechanism comprises a hub having an axis. The hub comprises a plurality of apertures corresponding to the predetermined number of limbs of the electromagnetic core, i.e. an aperture in the hub per limb of the electromagnetic core. Each of the apertures is configured to receive an end portion of a respective limb radially around the axis. The axis of the hub is coincident with the central axis of the electromagnetic core when the predetermined number of limbs of the electromagnetic core are received in the plurality of apertures. The holding mechanism comprises a plurality of jaws corresponding to the predetermined number of limbs, i.e. a jaw per limb of the electromagnetic core. Each of the jaws is configured to retain the end portion of a respective limb in a respective aperture when the predetermined number of limbs are received in the plurality of apertures. The holding mechanism comprises an adjustment mechanism configured to adjustably move the plurality of jaws in a radial direction with respect to the axis of the hub. Accordingly, when the predetermined number of limbs are received in the plurality of apertures, adjustment of the adjustment mechanism causes each limb to move radially towards or away from the axis of the hub, and hence the central axis of the electromagnetic core.

## Description

### Technical Field

The following disclosure relates to holding mechanisms for electromagnetic cores, in particular, electromagnetic cores having a plurality of limbs arranged around a central axis.

### Background

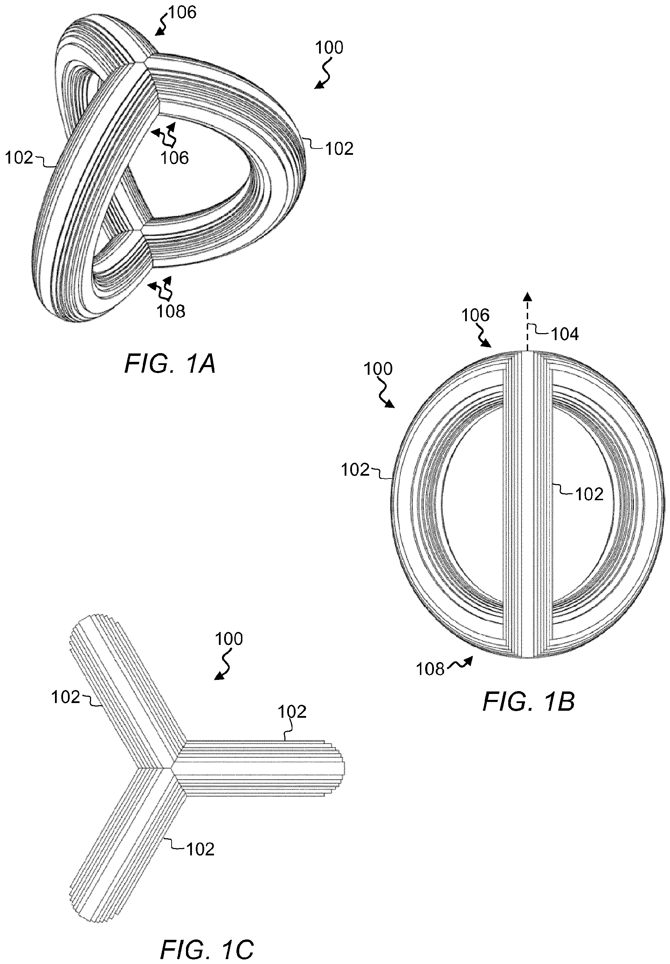

Magnetic cores are utilised across a range of electromagnetic devices such as transformers, electric motors, generators, and inductors. Three-phase electric power is often used in power distribution systems. An example three-phase magnetic core of UK patent application 2115649.2 is described in brief with reference to Figures 1A to 1C. Electromagnetic core 100 comprises three arc-shaped limbs 102 which are evenly spaced around a central axis 104. Each limb 102 is substantially identical. The arc-shaped limbs 102 are 180 degree arcs. Each limb 102 has a first end and a second end. Each first end has a first edge which lies along the central axis 104. Each second end has a second edge which lies along the central axis. Each limb 102 may be wound with one or more of a primary, a secondary and a modulating winding on one or more bobbins 105 (not illustrated in Figures 1A to 1C). Each limb 102 may comprise a plurality of electrical steel strips that are bent and laminated together. The use of thin steel laminations reduces power losses caused by eddy currents induced when sinusoidal voltage is applied to the windings. The width of the laminated electrical steel strips may be different in an arrangement that leads to the limbs 102 having a cross section that approximates a circle. Alternatively, the width of the laminated electrical steel strips in the limbs 102 may be constant, such that the limbs have a rectangular cross section.

The first ends 106 of each limb 102 should be securely held or clamped together, and the second ends 108 of each limb 102 should be securely held or clamped together, such that the ends of the limbs are in direct or close contact with each other for optimum electromagnetic performance of the core. The present disclosure relates to holding mechanisms to address such desires.

### Summary

There is provided a holding mechanism for an electromagnetic core which has a predetermined number of limbs, e.g. three limbs, arranged around a central axis. The holding mechanism comprises a hub having an axis. The hub comprises a plurality of apertures corresponding to the predetermined number of limbs of the electromagnetic core, i.e. an aperture in the hub per limb of the electromagnetic core. Each of the apertures is configured to receive an end portion of a respective limb radially around the axis. The axis of the hub is coincident with the central axis of the electromagnetic core when the predetermined number of limbs of the electromagnetic core are received in the plurality of apertures. The holding mechanism comprises a plurality of jaws corresponding to the predetermined number of limbs, i.e. a jaw per limb of the electromagnetic core. Each of the jaws is configured to retain the end portion of a respective limb in a respective aperture when the predetermined number of limbs are received in the plurality of apertures. The holding mechanism comprises an adjustment mechanism configured to adjustably move the plurality of jaws in a radial direction with respect to the axis of the hub. Accordingly, when the predetermined number of limbs are received in the plurality of apertures, adjustment of the adjustment mechanism causes each limb to move radially towards or away from the axis of the hub, and hence the central axis of the electromagnetic core. The adjustment mechanism may comprise a ring may have an axis which is coaxial with the axis of the hub.

The adjustment mechanism may comprise a plurality of toothed keys corresponding to the predetermined number of limbs, i.e. a toothed key per limb of the electromagnetic core or per jaw of the holding mechanism. The adjustment mechanism may comprise a scroll plate having a first side and a second side. Each toothed key may be coupled to a respective jaw. The first side of the scroll plate may comprise a spiral projection for engaging the toothed key of each of the jaws. The second side of the scroll plate may comprise a first bevel gear. The holding mechanism may comprise a second bevel gear having an axle and configured to engage the first bevel gear. The hub may comprise an opening for rotatably supporting the second bevel gear, and an end of the axle may be engagable by a tool, e.g. having a drive socket, for rotating the second bevel gear. The holding mechanism may comprise a third bevel gear and/or a fourth bevel gear each configured to engage the first bevel gear and each having an axle with an end engagable by a tool. Advantageously, this enables the scroll plate to be turned by using a tool to turn any of the second, third or fourth bevel gears. The hub may comprise a plurality of slots corresponding to the predetermined number of limbs, and the toothed key of each of the jaws may be received in a respective slot of the plurality of slots. Each toothed key of each of the jaws may include a plurality of teeth, the plurality of teeth comprising arced projections for engaging the spiral projection of the scroll plate.

Alternatively or additionally, the adjustment mechanism may engage a radially outer side of the jaws. The adjustment mechanism may comprise a band or strip for engaging the radially outer side of the jaws, the band or strap having a first end and a second end. The first end and the second end may be joined using closing means. The closing means may comprise a threaded fastener arranged to engage a threaded nut. For example, the threaded nut may be a barrel nut, and the threaded fastener may be a bolt. Alternatively, the closing means may comprise a biasing member, such as a spring, arranged to bias the first end and the second end together. Each of the jaws may comprise a flange for retaining the band on the radially outer side of the jaws.

The hub may be integrally formed, i.e. formed of a single piece. Alternatively, the hub may be forms from two or more parts coupled together. The apertures and/or the jaws may be shaped to conform with the shape of the limbs.

There is provided an assembly comprising an electromagnetic core having a predetermined number of limbs arranged around a central axis, and the holding mechanism described above. The predetermined number of limbs are received in the plurality of apertures of the holding mechanism. The holding mechanism may be a first holding mechanism arranged to receive the first ends of the limbs of the electromagnetic core, and the assembly may comprise a second holding mechanism, as described above, arranged to receive the second ends of the limbs of the electromagnetic core. The predetermined number of limbs may be three.

### Brief description of the drawings

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding:
Figures 1A to 1C are schematic views of a magnetic core;
Figures 2A to 2D are schematic views of a holding mechanism, in which Figures 2C and 2D omit features for illustrative clarity;
Figure 3 is a schematic view of components of an adjustment mechanism for the holding mechanism of Figures 2A to 2D;
Figures 4A to 4C are schematic views of a holding mechanism, in which Figure 4C is an exploded view; and
Figure 5 is a flowchart of a process for assembling an electromagnetic core using a holding mechanism.

### Detailed description

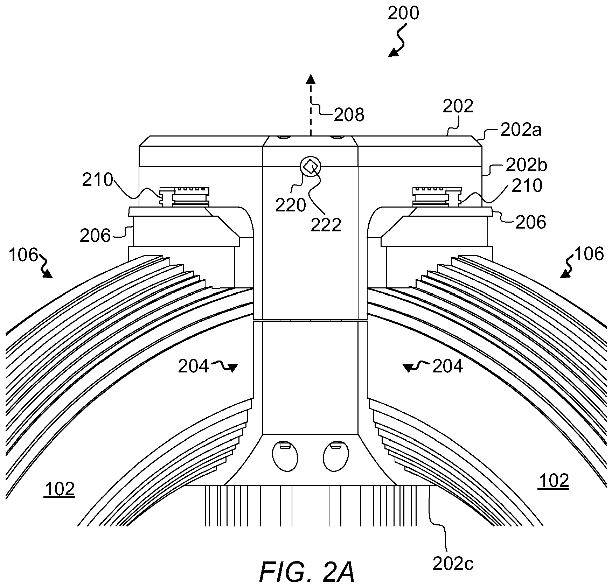

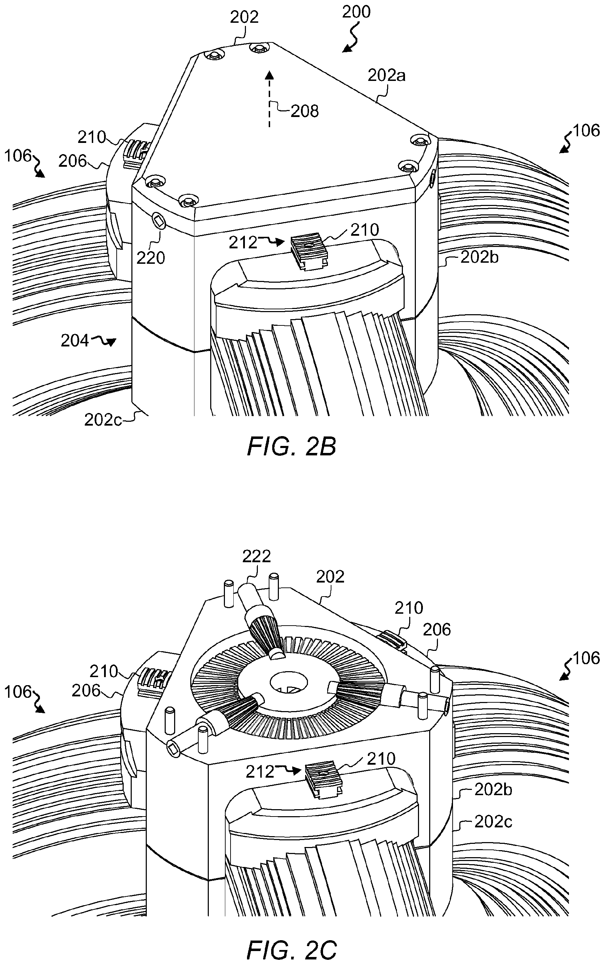

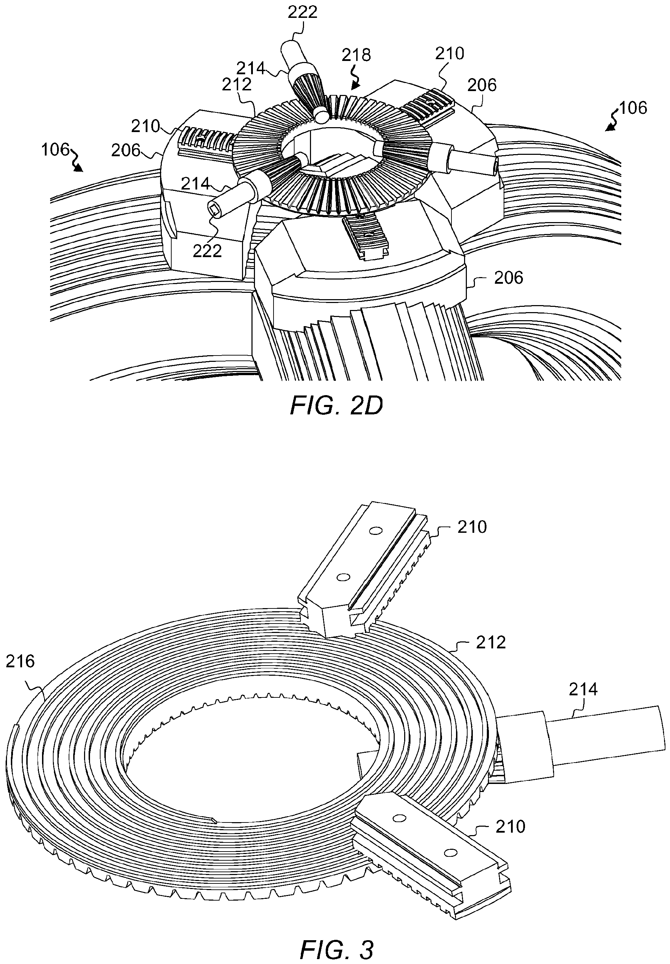

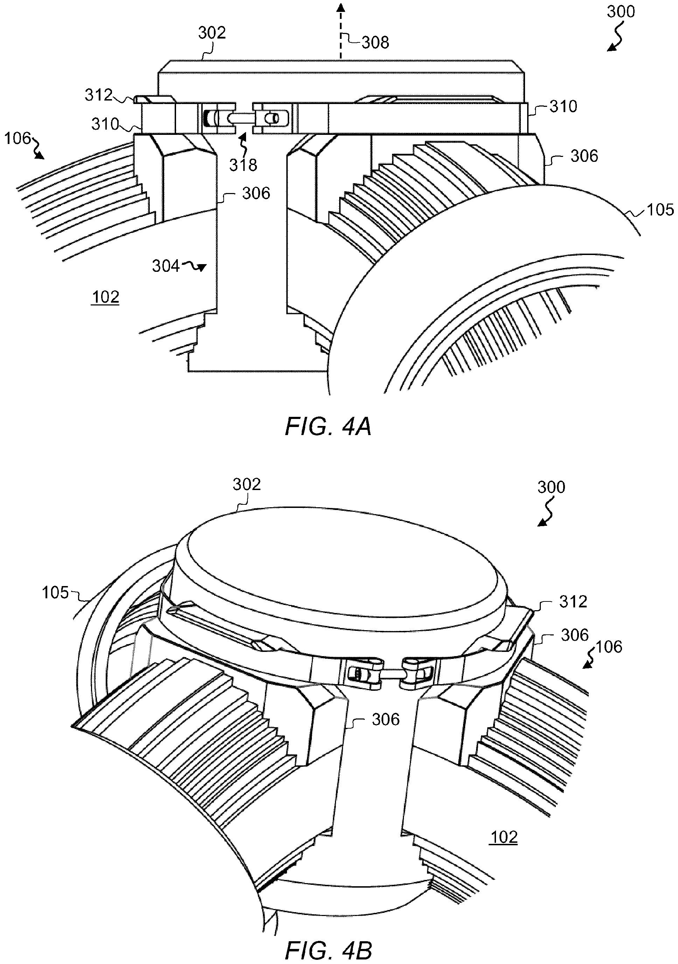

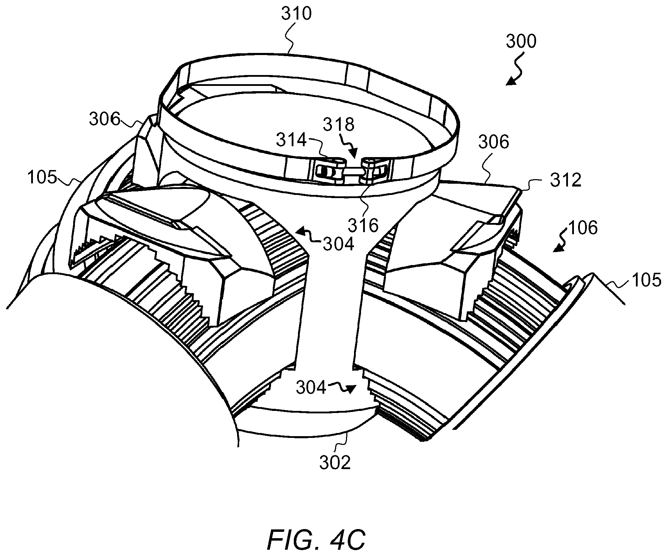

The present disclosure relates to holding mechanisms for clamping or holding together the limbs of a multi-limbed electromagnetic core, such as the electromagnetic core described with reference to Figure 1A to 1C. The holding mechanisms retain the limbs in direct or close contact with each other to minimise any discontinuities that may be caused by gaps between the limbs which would otherwise be detrimental to flow of magnetic flux in the electromagnetic core. Specific example holding mechanisms are discussed with reference to Figures 2A to 2D, and Figures 4A to 4C.

With reference to Figures 2A to 2D, a holding mechanism 200 holds an electromagnetic core having three limbs, such as electromagnetic core 100. The holding mechanism 200 comprises a hub 202. The hub 202 comprises a first portion 202a, a second portion 202b, and a third portion 202c. The first portion 202a, the second portion 202b, and the third portion 202c, are coupled together e.g. with fasteners.

The hub 202 has three apertures 204, each aperture 204 for receiving an end portion 106 of each limb 102 of the electromagnetic core 100. The apertures 204 are formed across the second portion 202b and the third portion 202c of the hub 202. The holding mechanism 200 comprises three jaws or wedges 206, each for engaging and/or retaining each limb of the electromagnetic core 100 in its respective aperture 204. The hub 202 has an axis 208 which is coaxial with the axis 104 of the electromagnetic core 100.

Each jaw 206 comprises a shape which substantially corresponds and conforms to the shape of the end portion 106 of the limb 102 with which it engages to maximise contact area between the jaw 206 and the limb 102. Similarly, each aperture 204 comprises a shape which substantially corresponds and conforms to the shape of the end portion 106 of the limb 102 with which it engages to maximise contact area between the apertures 204 and the limb 102.

The radial distance of the jaws 206 from the axis 208 can be adjusted using an adjustment mechanism, thereby adjusting the position of the limbs 102 with respect to the axis 104 when the limbs 102 are being held by the holding mechanism 200. Accordingly, adjustment of the radial position of the jaws 206 enables the limbs 102 of the electromagnetic core 100 to meet at its axis 104.

The adjustment mechanism comprises a toothed key 210 for each jaw 206, a scroll plate 212, and three bevel gears 214. Each toothed key 210 is coupled to a respective jaw 206. Alternatively, each toothed key 210 may be integrally formed as part of the respective jaw 206. The hub 202, specifically the second portion 202b, comprises three slots for aligning and receiving the respective toothed keys 210.

The scroll pate 212 comprises an annulus having a first having a first side and a second side. The annulus has an axis which is coaxial with the axis 208 of the hub 202. The first side of the scroll plate comprises a spiral projection 216 for engaging the toothed keys 210. The spiral projection 216 has a predetermined distance between projections of the spiral. The second side of the scroll plate comprises a bevel gear 218. The teeth of each toothed key 210 form arced projections configured to engage with the spiral projection 216. In other words, the spacing and shape of the arced projections correspond with the spacing and shape of spiral projection 216.

The bevel gears 214 are each configured to engage with the bevel gear 218 of the scroll plate. In other words, the spacing and shape of the gear teeth of the bevel gears 214 correspond with the spacing and shape of gear teeth of the bevel gear 218. Each of the bevel gears 214 has an axle. The hub 202 comprises three openings 220, formed between the first portion 202a and the second portion 202b. Each opening 220 is for receiving the axle of a respective bevel gear 214. The openings 220 support the respective axle whilst allowing the bevel gear 214 to rotate. A bearing may be located in each opening 220 to reduce friction when the axle rotates. An end 222 of each axle is accessible, e.g. by a user from outside the hub 202. Each end 222 comprises a head that can be driven by a tool. The ends 222 are illustrated as having a Robertson socket but any suitable drive socket may alternatively be used, such as a hex socket, a Philips socket, a Torx socket, or a pentalobular socket.

Rotation, using an appropriate tool, of the drive head of any one of the ends 222 causes rotation of the respective bevel gear 214, which engages the bevel gear 218 to turn the scroll plate 212, thereby rotating the spiral projection 216 which causes the toothed keys 210 to move in a radial direction relative to the axis 208. As the toothed keys 210 are coupled to their respective jaws 206, the jaws 206 also move in a radial direction relative to the axis 208 when the end 222 of a bevel gear 214 is rotated.

The holding mechanism of Figures 2A to 2D comprises three bevel gears 214, any of which can be turned to adjust the radial distance between the jaws 206 and the axis 208 but it is clear that a single bevel gear 214 would still enable this adjustment. In holding mechanisms with a plurality of bevel gears, the radial distance between the jaws and the axis can be adjusted using any of the ends which can be advantageous in case it may be easier for a user to access the end of one of the bevel gears than the ends of other bevel gears. Further, a plurality of bevel gears 214 can enable retaining forces on the scroll plate 212 to be evenly distributed at different positions arounds the scroll plate 212.

With reference to Figures 4A to 4C, a holding mechanism 300 holds an electromagnetic core having three limbs, such as electromagnetic core 100. The holding mechanism 300 comprises a hub 302. The hub 302 has three apertures 304, each aperture 304 for receiving an end portion 106 of each limb 102 of the electromagnetic core 100. The holding mechanism 300 comprises three jaws 306, each for engaging and/or retaining each limb of the electromagnetic core 100 in its respective aperture 304. The hub 302 has an axis 308 which is coaxial with the axis 104 of the electromagnetic core 100.

Each jaw 306 comprises a shape which substantially corresponds and conforms to the shape of the end portion 106 of the limb 102 with which it engages to maximise contact area between the jaw 306 and the limb 102. Similarly, each aperture 304 comprises a shape which substantially corresponds and conforms to the shape of the end portion 106 of the limb 102 with which it engages to maximise contact area between the apertures 304 and the limb 102.

The radial distance of the jaws 306 from the axis 308 can be adjusted using an adjustment mechanism, thereby adjusting the position of the limbs with respect to the axis 104 when the limbs are being held by the holding mechanism. Accordingly, adjustment of the radial position of the jaws 306 enables the limbs 102 of the electromagnetic core 100 to meet at its axis 104.

The adjustment mechanism comprises a strap or band 310 which engages a radially outer side of the jaws 306. Each jaw 306 comprises a flange 312 for holding the band 310 in position. The band 310 has a first end 314 and a second end 316. The first end 314 and the second end 316 are connected to each other using a closing means 318. The closing means 318 comprises a threaded fastener arranged to engage a threaded nut. For example, the threaded nut may be a barrel nut, and the threaded fastener may be a bolt. Alternatively, the closing means 318 may comprise a biasing member, such as a spring, arranged to bias the first end 314 and the second end 316 together. The closing means 318 causes a radial force towards the axis 308 to be exerted on the radially outer side of the jaws 306. The closing means 318 may be adjusted, e.g. tightened or loosened in the case of a threaded fastener engaging a threaded nut, to adjust the magnitude of the radial force towards the axis 308 that is applied to the radially outer side of the jaws 306.

A further configuration of a holding mechanism is substantially identical to the holding mechanism 200 with the adjustment mechanism comprising a scroll plate, and a second adjustment mechanism comprising a strap or band, substantially the same as band 310, which engages a radially outer side of the jaws of the holding mechanism. The jaws may each comprise a flange, substantially the same as flange 312, for holding the band in position.

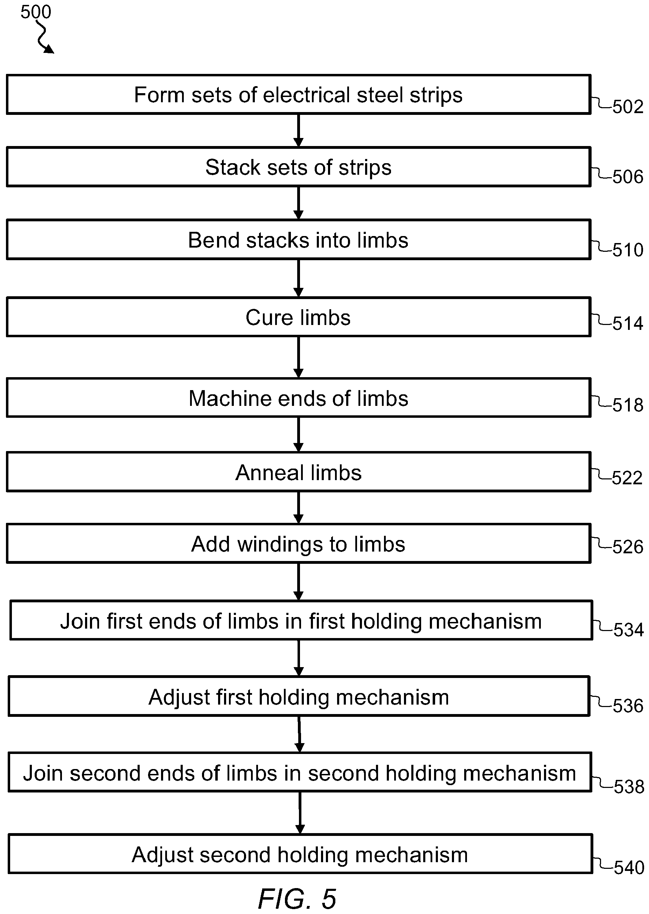

Figure 5 illustrates a process 500 of manufacturing a core such as electromagnetic core 100 using a holding mechanism 200 or 300.

At step 502, sets of electrical steel strips are formed, one set of strips being for a limb of the core. The strips may be formed, for example, by punching, stamping or laser cutting the width and length of each strip out of a sheet of electrical steel. The electrical steel may be, for example, Thyseen-Krupp powercore^{®} C or powercore^{®} H.

At step 506, each set of strips is arranged into a stack. At step 510, each stack is bent into an arc-shape limb, for example, using a jig. The stacks are bent through application of an external load in a direction perpendicular to a plane formed by the length and width of the strips.

The electrical steel strips may include a surface coating of electrically-insulating material. The surface coating may be curable, such as a varnish or paint. The curable surface coating in the stacks of strips may be cured at step 514. For example, the curable surface coating may be cured by heating the stacks in an autoclave. The electrically-insulating surface coating may be formed during annealing of the electrical steel strips. For example, the electrical steel strips may be subjected to annealing under an air atmosphere in a roller furnace for a soaking time of 1 to 2 minutes at a maximum temperature of 860°C. Due to the air atmosphere, cut edges of the electrical steel strips oxidize, creating an insulating coating. A coating thickness of 2 to 5 micrometres provides good electrical resistance and a high stacking factor.

Each limb has a first end and a second end. At step 518, the ends of the limbs may be machined to produce angled ends which allow the limbs to mate tightly with each other. For example, if the core being manufactured has three limbs, the ends are machined to an angle of 120 degrees. The machining may include one or more of sanding, grinding, milling, and cutting, such as waterjet cutting or laser cutting. Alternatively or additionally to step 518, the strips for the limbs may be formed at step 502 with angled ends. In some examples, the ends of the limbs may be machined to produce lap joints which allow the limbs to mate tightly with each other.

At step 522, the limbs may be annealed. If the curable surface coating is thermally cured at step 514, the annealing of step 522 may be included step 514. In some examples, the core may be annealed after the limbs are joined at step 534. The annealing may be magnetic annealing to improve the magnetic properties of the limb. Additionally or alternatively, the annealing may be stress relief annealing to relieve internal mechanical stress in the limb, for example, due to the bending in step 510. For example, the annealing may include a 2 hour soak in a box-type furnace with a protective atmosphere of preferably 100% nitrogen at between 820°C and 850°C, followed by cooling within the furnace to about 200°C to 300°C.

At step 526, one or more of a primary winding, a secondary winding and modulating windings may be applied to each limb. Applying windings to the limbs may be carried out at any point before both ends of each limb are connected together at step 538, in other words, when there is at least one open end. Applying windings around the limbs may include winding wire around a limb to form the winding. Alternatively, applying windings around the limbs may include spinning a wire onto a bobbin and inserting the limb into the bobbin. The winding process is simplified by winding the limbs prior to joining the limbs together. The windings may be distributed on the limbs with or without spacers.

At step 534, the first ends of the limbs are inserted into respective apertures of a first holding mechanism such as holding mechanism 200 or 300. At step 536, the jaws of the first holding mechanism are inserted into respective apertures of the first holding mechanism, and the adjustment mechanism of the first holding mechanism is employed to adjust the radial position of the jaws with respect to the axis of the hub of the first holding mechanism, causing the first ends of the limbs of the electromagnetic core to meet at its axis.

At step 538, the second ends of the limbs may be inserted into respective apertures of a second holding mechanism such as holding mechanism 200 or 300. At step 540, the jaws of the second holding mechanism may be inserted into respective apertures of the second holding mechanism, and the adjustment mechanism of the second holding mechanism may be employed to adjust the radial position of the jaws with respect to the axis of the hub of the second holding mechanism, causing the second ends of the limbs of the electromagnetic core to meet at its axis.

Connecting the ends of the limbs together at steps 534 and 538 may include using an adhesive such as a metal-to-metal structural adhesive. Steps 534 and 538 may be carried out sequentially or simultaneously. Steps 536 and 540 may be carried out sequentially or simultaneously.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term "comprising" or "including" does not exclude the presence of other elements

## Claims

1. A holding mechanism for an electromagnetic core having a predetermined number of limbs arranged around a central axis, the holding mechanism comprising:
a hub comprising:
an axis; and
a plurality of apertures corresponding to the predetermined number of limbs, wherein each of the apertures is configured to receive an end portion of a respective limb radially around the axis, wherein the axis is coincident with the central axis when the predetermined number of limbs are received in the plurality of apertures;
a plurality of jaws corresponding to the predetermined number of limbs, wherein each of the jaws is configured to retain the end portion of a respective limb in a respective aperture when the predetermined number of limbs are received in the plurality of apertures; and
an adjustment mechanism configured to adjustably move the plurality of jaws in a radial direction with respect to the axis of the hub.

2. The holding mechanism of claim 1, wherein the adjustment mechanism comprises a plurality of toothed keys corresponding to the predetermined number of limbs, and a scroll plate having a first side and a second side, wherein the first side comprises a spiral projection for engaging the toothed key of each of the jaws, wherein the second side comprises a first bevel gear, and wherein each toothed key is coupled to a respective jaw.

3. The holding mechanism of claim 2 comprising a second bevel gear having an axle and configured to engage the first bevel gear, wherein the hub comprises an opening for rotatably supporting the second bevel gear, and wherein an end of the axle is engagable by a tool for rotating the second bevel gear.

4. The holding mechanism of any of claims 2 or 3, wherein the hub comprises a plurality of slots corresponding to the predetermined number of limbs, wherein the toothed key of each of the jaws is received in a respective slot of the plurality of slots.

5. The holding mechanism of any of claims 2 to 4, wherein each toothed key of each of the jaws includes a plurality of teeth, the plurality of teeth comprising arced projections for engaging the spiral projection of the scroll plate.

6. The holding mechanism of any preceding claim, wherein the adjustment mechanism engages a radially outer side of the jaws.

7. The holding mechanism of claim 6, wherein the adjustment mechanism comprises a band for engaging the radially outer side of the jaws, the band having a first end and a second end, wherein the first end and the second end are joined using closing means.

8. The holding mechanism of claim 7, wherein the closing means comprises a threaded fastener arranged to engage a threaded nut.

9. The holding mechanism of claim 7, wherein the closing means comprises a biasing member arranged to bias the first end and the second end together.

10. The holding mechanism of any of claims 7 to 9, wherein each jaw comprises a flange for retaining the band on the radially outer side of the jaws.

11. An assembly comprising:
an electromagnetic core having a predetermined number of limbs arranged around a central axis; and
the holding mechanism of any of claims 1 to 10,
wherein the predetermined number of limbs are received in the plurality of apertures of the holding mechanism.

12. The assembly of claim 11, wherein the predetermined number of limbs is three.
